# EUROPÄISCHE PATENTANMELDUNG

(11) **EP 0 864 888 A1**
(43) Veröffentlichungstag der Anmeldung: **16.09.1998**
(21) Anmeldenummer: 98810004.6
(22) Anmeldetag: 06.01.1998
(51) Int. Cl.: G02B 6/255, G02B 6/38

(54) **Stecker für eine optische Steckverbindung und Verfahren zu seiner Herstellung**

(30) Priorität: 13.02.1997 CH 313/97
(71) Anmelder: Diamond SA, 6616 Losone (CH)
(72) Erfinder: Marazzi, Silvio, 6600 Locarno (CH); Chappuis, Stéphane, 6622 Ronco S/Ascona (CH)
(74) Vertreter: Wenger, René

(57) **Zusammenfassung**

In einem Steckerstift (1) ist ein vormontierter Lichtwellenleiter-Abschnitt (2) derart gehalten, dass er sich von einer Stirnseite (3) bis zu einer seitlichen Schweissöffnung (4) im Steckerstift erstreckt. Von einer kabelseitigen Eintrittsfläche (7) her führt eine zum Lichtwellenleiter-Abschnitt (2) koaxiale Bohrung (6) ebenfalls bis zur Schweissöffnung. In der Schweissöffnung kann der vormontierte Lichtwellenleiter-Abschnitt mit dem Lichtwellenleiter (27) eines Lichtwellenleiter-Kabels (24) feldmässig verschweisst werden. Der Stekkerstift ist aus wenigstens zwei Komponenten zusammengesetzt, von denen die eine (8) den der Zentrierung des Steckerstifts dienenden Aussenmantel und die andere (10) die Schweissöffnung (4) und die Bohrung (6) aufweist. Die beiden Komponenten bestehen aus unterschiedlichen Werkstoffen, was die Herstellung erheblich vereinfacht.

## Beschreibung

Die Erfindung betrifft einen Stecker für eine optische Steckverbindung gemäss dem Oberbegriff von Anspruch 1.

Bei derartigen Steckern ist das Lichtwellenleiter-Kabel nicht bereits werkseitig als sogenannter pig-tail mit dem Stecker konfektioniert, sondern es wird erst beim Verlegen des Kabels feldmässig montiert. Vormontiert ist lediglich ein Lichtwellenleiter-Abschnitt im Steckerstift, der vor der Endmontage des Steckers durch eine Schweissung mit dem Lichtwellenleiter-Kabel verbunden wird. Gattungsmässig vergleichbare Stecker sind beispielsweise durch die WO 96/31795 oder durch die DE-A-195 17 750 bekanntgeworden.

Ein Nachteil bei den Steckern gemäss Stand der Technik besteht darin, dass der Steckerstift als monolithischer Körper ausgebildet ist, der gleichzeitig der exakten Positionierung des Lichtwellenleiters in der Steckverbindung und der Schweissung der Lichtwellenleiter dient. Um eine möglichst exakte Positionierung in der Steckverbindung und damit geringe Dämpfungswerte zu gewährleisten, muss der Steckerstift aus einem harten und abriebfesten Material gefertigt sein, das nur schwer zu bearbeiten ist. Anderseits erfordert die feldmässige Schweissung der Lichtwellenleiter aber gerade besondere Bearbeitungsmassnahmen, insbesondere das Anbringen der seitlichen Schweissöffnung. Die Bearbeitung des monolithischen Steckerstifts aus Keramik oder aus einem metallischen Sinterwerkstoff ist daher äusserst aufwendig und verursacht hohe Kosten.

Es ist daher eine Aufgabe der Erfindung, einen Stecker der eingangs genannten Art zu schaffen, der ohne Beeinträchtigung der Funktion wesentlich einfacher herzustellen ist. Diese Aufgabe wird erfindungsgemäss mit einem Stecker gelöst, der die Merkmale im Anspruch 1 aufweist. Die Aufteilung des Steckerstifts in wenigstens zwei Komponenten hat den Vorteil, dass jede der beiden Komponenten entsprechend der ihr zugewiesenen Funktion hergestellt werden kann. Eine erste Komponente dient dabei der Zentrierung des Steckerstifts und ist dementsprechend mit einem hochpräzise bearbeiteten Aussenmantel versehen. Die zweite Komponente dient ausschliesslich der Aufnahme und der Verschweissung des vormontierten Lichtwellenleiter-Abschnitts und des kabelseitigen Lichtwellenleiters.

Besonders vorteilhaft ist die erste Komponente, eine Stekkerhülse, und die zweite Komponente ein in die Steckerhülse eingesetzter Verbindungskörper, wobei die Schweissöffnung in einem aus der Steckerhülse ragenden Teil des Verbindungskörpers angeordnet ist. Der Verbindungskörper erstreckt sich dabei vorteilhaft nur über einen Teil der Gesamtlänge der Steckerhülse. Die Stirnseite wird dabei durch einen in der Steckerhülse gehaltenen Einsatz mit einer zentralen Bohrung gebildet, in welcher der Lichtwellenleiter-Abschnitt fixiert ist. Der Lichtwellenleiter-Abschnitt wird dabei nur am Einsatz und am Verbindungskörper fixiert und erstreckt sich dazwischen über einen Hohlraum in der Steckerhülse. Einsatz und Verbindungskörper können beispielsweise in die Steckerhülse eingeklebt werden. Je nach Material wäre auch eine Lötung oder eine andere Verbindung denkbar.

Die Steckerhülse besteht vorzugsweise aus einem besonders harten Werkstoff, wie z.B. Keramikmaterial oder Hartmetall. Diese Werkstoffe sind besonders resistent und lassen sich sehr präzise bearbeiten. Dagegen kann der Verbindungskörper aus einem anderen Werkstoff mit einem vorzugsweise geringeren Härtegrad bestehen, wie z.B. aus Keramikmaterial von geringerer Qualität, Quarzglas oder ein anderes hitzebeständiges Material. Der Verbindungskörper lässt sich auf diese Weise besonders leicht bearbeiten. Abgesehen von einer gewissen Temperaturbelastung beim Schweissvorgang ist er keinerlei mechanischen Belastungen unterworfen. Der Einsatz an der Stirnseite kann ebenfalls aus einem im Vergleich zur Stekkerhülse relativ weichen Werkstoff bestehen. Beim Zentrieren der Faserstirnseite in situ unmittelbar bei der Montage, wird vorzugsweise eine weiche Legierung verwendet, die sich plastisch verformen lässt. Dieses Zentrierverfahren ist beispielsweise durch die EP-A-94 906 bekanntgeworden.

Zwischen dem Einsatz und der Steckerhülse ist vorzugsweise eine Zwischenhülse angeordnet, welche die Eindringtiefe des Verbindungskörpers in der Steckerhülse begrenzt. Gleichzeitig dient diese Zwischenhülse aber auch dem Ausgleich von unterschiedlichen Längenausdehnungskoeffizienten zwischen dem Einsatz und der Steckerhülse.

Weitere Verbesserungen am Stecker lassen sich erreichen, wenn der Verbindungskörper mit einem Kabelaufnahmeelement verbunden ist, der eine erste Bohrung zur Aufnahme des Lichtwellenleiters und eine zweite Bohrung mit grösserem Durchmesser zur Aufnahme der Umhüllung des Lichtwellenleiters aufweist und wenn im Übergangsbereich von der ersten zur zweiten Bohrung eine seitliche Einfüllöffnung für das Einfüllen von Klebstoff im Kabelaufnahmeelement angeordnet ist. Dadurch wird einerseits das Kabel im Stecker fixiert und anderseits wird der freigelegte Lichtwellenleiter an dieser Stelle geschützt.

Der Verbindungskörper kann als Zylinderabschnitt mit einer durchgehenden zentralen Längsbohrung ausgebildet sein, wobei die Schweissöffnung eine den Zylinderabschnitt durchdringende Querbohrung ist. Anstelle der Bohrung könnte aber auch ein Schlitz angebracht werden, der bis zur zentralen Längsbohrung eindringt. Die Querbohrung ergibt jedoch eine etwas bessere Biegesteifigkeit. Die zentrale Längsbohrung wird durch die Querbohrung vorzugsweise in zwei Abschnitte unterteilt, von denen der stirnseitige Abschnitt länger ist als der kabelseitige Abschnitt. Der stirnseitige Abschnitt kann dabei genügend tief in die Steckerhülse eindringen. Der kabelseitige Abschnitt muss dagegen nur gerade lange genug ausgebildet sein, um den eingeführten Lichtwellenleiter exakt koaxial auf den vormontierten Lichtwellenleiter-Abschnitt auszurichten.

Die Erfindung betrifft auch ein Verfahren zum Herstellen eines Steckers gemäss dem Oberbegriff von Anspruch 1. Dabei muss es sich jedoch nicht zwangsläufig um einen Stecker der vorstehend beschriebenen Art handeln. Das Verfahren lässt sich ohne weiteres auch an bekannten Steckern mit monolithischen Steckerstiften anwenden.

Ein Nachteil der bekannten Verfahren besteht nämlich darin, dass der vormontierte Lichtwellenleiter-Abschnitt ohne die Möglichkeit einer vorgängigen Messung der Zentrizität, der Durchflussdämpfung, der Rückflussdämpfung und allenfalls anderer Werte, eingesetzt wird. Eine zuverlässige Qualitätskontrolle der vormontierten Stecker ist damit praktisch ausgeschlossen. Diese ist erst möglich, wenn das Lichtwellenleiter-Kabel angeschweisst ist und wenn Licht eingespeist werden kann. In der eingangs erwähnten DE-A-195 17 750 wird vorgeschlagen, den Steckerstift in eine Zentrier- und Schleifvorrichtung einzuspannen und mittels eines Hilfslichtwellenleiters Licht einzuspeisen. Die Endbearbeitung des Steckerstifts am Aussenmantel erfolgt erst in diesem Stadium aufgrund der an der Stirnseite gemessenen Werte. Auch dieses Verfahren ist äusserst aufwendig und erlaubt keine präzisen Messungen an der Stirnseite.

Die bekannten Nachteile können erfindungsgemäss mit einem Verfahren überwunden werden, das die Merkmale im Anspruch 1 aufweist. Die Einführung eines durchgehenden Lichtwellenleiters von der Eintrittsfläche bis zur Stirnseite und die anschliessende Zentrierung und Fixierung an der Stirnseite erlaubt es, bereits in diesem Stadium das stirnseitige Ende der Faser und die Stirnseite selbst auf Endmass zu bearbeiten. Gleichzeitig können aber auch alle üblichen Messvorgänge durchgeführt werden, wie dies bei den bekannten pig-tail-Montagen üblich ist. Sämtliche Messvorgänge können protokolliert werden, womit ein hoher Qualitätsstandard gewährleistet ist. Erst jetzt erfolgt die Durchtrennung des Lichtwellenleiters in der Schweissöffnung, so dass der bereits zentrierte Lichtwellenleiter-Abschnitt im Steckerstift zurückbleibt.

Weitere Einzelmerkmale und Vorteile der Erfindung werden nachstehend anhand der Zeichnungen genauer beschrieben. Es zeigen:
- Figur 1: einen Querschnitt durch einen erfindungsgemässen Steckerstift,
- Figur 2: eine Draufsicht auf den um 90° gedrehten Stekkerstift gemäss Figur 1,
- Figur 3: einen Querschnitt durch eine Anordnung bestehend aus Steckerstift und Kabelaufnahmeelement,
- Figur 4: die Anordnung gemäss Figur 3 mit eingeführtem Lichtwellenleiter vor dem Abtrennen des vormontierten Abschnitts,
- Figur 5: die Anordnung gemäss Figur 4 mit zurückgezogenem Lichtwellenleiter-Kabel,
- Figur 6: die Anordnung gemäss Figur 5 beim Schweissen eines eingeführten Lichtwellenleiter-Kabels,
- Figur 7: die Anordnung gemäss Figur 6 nach dem Schweissvorgang, und
- Figur 8: eine perspektivische Darstellung eines mit einem Kabel verbundenen Steckers mit weiteren Bauteilen.

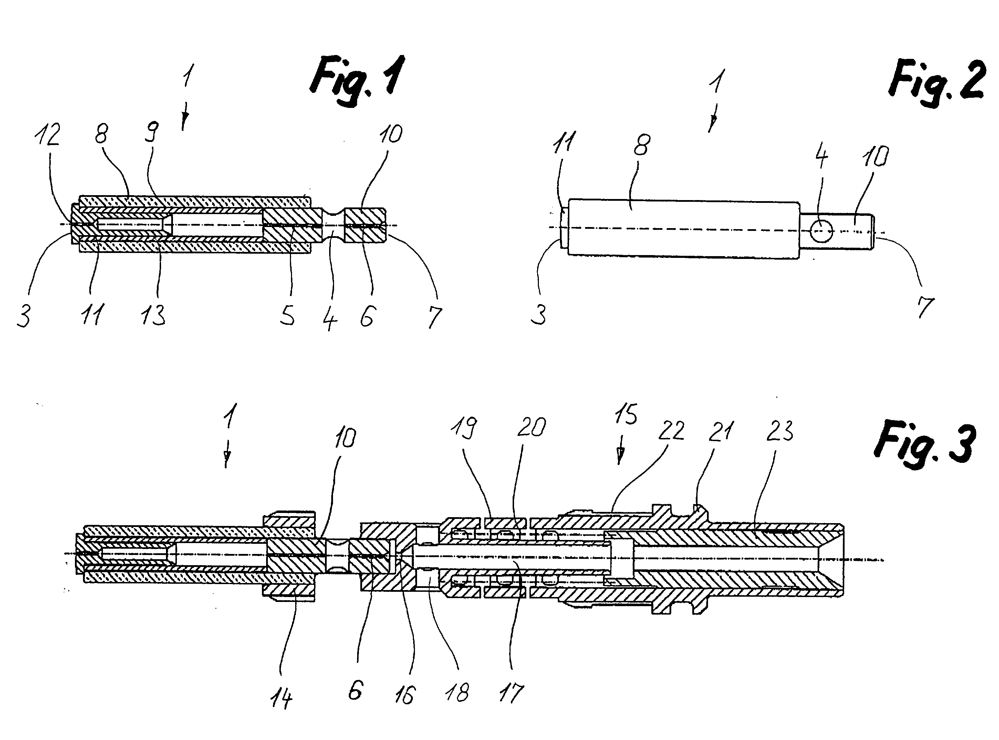

In den Figuren 1 und 2 ist ein Steckerstift 1 dargestellt, der aus mehreren Komponenten zusammengesetzt ist. Eine Stekkerhülse 8 aus keramischem Material hat einen hochpräzise bearbeiteten Aussenmantel 9, der dazu dient, den Steckerstift in einer Buchse zu positionieren. In der Steckerhülse ist kabelseitig ein zylindrischer Verbindungskörper 10 eingesetzt. Dieser Verbindungskörper ist in Längsrichtung des Steckerstifts durchgehend mit einer Bohrung 5,6 versehen, welche gerade gross genug ist, um einen Lichtwellenleiter aufzunehmen. Der Bohrungsabschnitt 5 ist dabei etwas länger als der Bohrungsabschnitt 6.

Eine Querbohrung bildet eine Schweissöffnung 4, wobei der Durchmesser der Querbohrung ersichtlicherweise so gewählt werden muss, dass seitlich noch ausreichend starke Materialstege verbleiben. Die Querbohrung hat einen geringen Abstand zur Steckerhülse 8. Im Bereich einer Eintrittsfläche 7 kann eine kleine trichterförmige Erweiterung angeordnet sein.

Die Stirnseite 3 des Steckerstifts 1 wird durch einen pilzförmigen Einsatz 11 gebildet, der nur gerade im äussersten Bereich eine dem Durchmesser des Lichtwellenleiters entsprechende Stirnbohrung 12 aufweist. Zwischen dem Einsatz 11 und der Steckerhülse 8 ist eine Zwischenhülse 13 angeordnet, die kabelseitig einen Anschlag für den Verbindungskörper 10 bildet. Die einzelnen Komponenten können miteinander verklebt und/oder mit Presssitz zusammengefügt werden.

In der Darstellung gemäss Figur 3 ist der Steckerstift gemäss Figur 1 kabelseitig mit einem insgesamt mit 15 bezeichneten Kabelaufnahmeelement verbunden. Zusätzlich ist auf der Stekkerhülse 8 am hinteren Ende ein Positionierring 14 aufgesetzt, der später die winkelmässige Positionierung des Stekkerstifts in einem Aussengehäuse erlaubt.

Das Kabelaufnahmelement 15 erfüllt verschiedene Funktionen, in dem es einerseits das Lichtwellenleiter-Kabel festhält und anderseits den Steckerstift in axialer Richtung abfedert. Zu diesem Zweck hat das Kabelaufnahmeelement einen skelettartig unterbrochenen Federabschnitt 19, in dem zusätzlich eine Schraubendruckfeder 20 angeordnet ist. Der Lichtwellenleiter wird durch eine erste Bohrung 16 in den Verbindungskörper 10 eingeführt, welche koaxial zur Bohrung 6 angeordnet ist. Eine zweite Bohrung 17 mit grösserem Durchmesser dient zur Aufnahme der Umhüllung des Lichtwellenleiters.

An der Aussenseite des Kabelaufnahmeelements sind in Längsrichtung verlaufende Einprellleisten 22 angeordnet, die der kraftschlüssigen Verbindung mit einem Steckergehäuse dienen. An einem Flansch 21 kann ein Knickschutz befestigt werden und eine Kabelführungshülse 23 dient gleichzeitig als Widerlager für die Schraubendruckfeder 20.

Im Bereich des Übergangs von der ersten Bohrung 16 zur zweiten Bohrung 17 ist eine Einfüllöffnung 18 angeordnet, durch welche später die Kabelumhüllung verklebt werden kann.

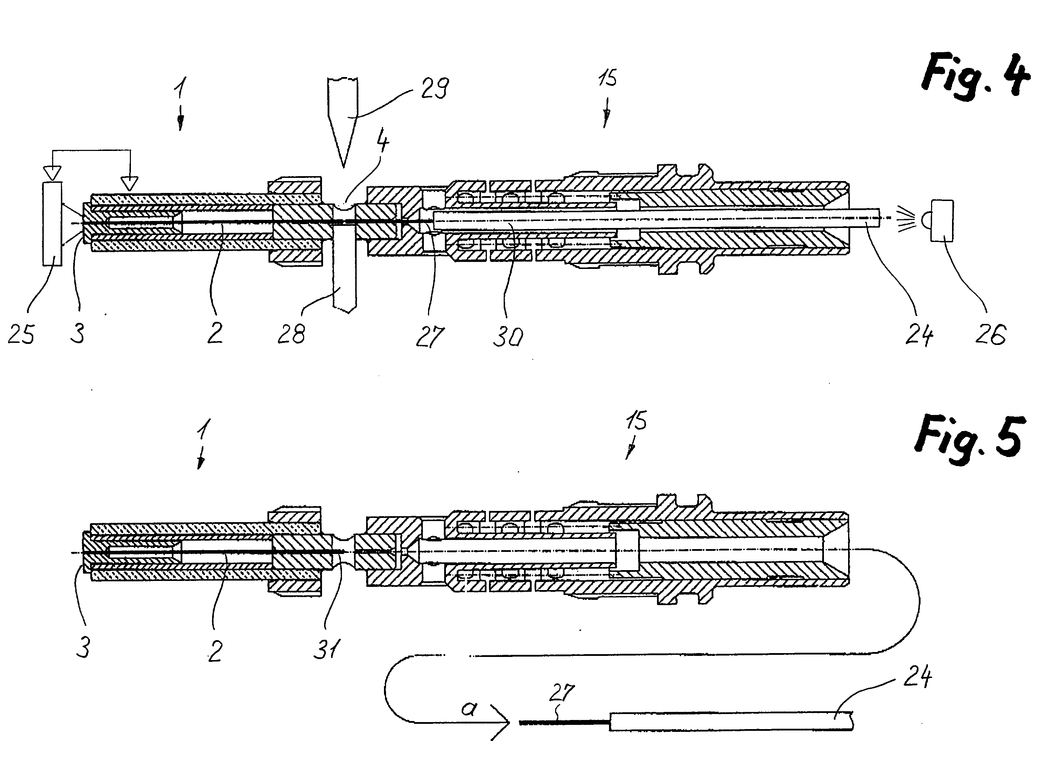

Die Figur 4 zeigt stark schematisiert die Vormontage eines Lichtwellenleiter-Abschnitts 2 im Steckerstift 1. Zunächst wird ein Lichtwellenleiter-Kabel 24 in die Anordnung eingeführt, dessen Lichtwellenleiter 27 in einem Teilbereich von der Umhüllung 30 befreit ist. Der Lichtwellenleiter wird an der Stirnseite 3 mit Hilfe einer Zentrier- und Messvorrichtung 25 auf den Aussenmantel 9 der Steckerhülse 8 zentriert. Zu diesem Zweck wird über eine Lichtquelle 26 Licht in das Kabel 24 eingespeist. Die vorgenommenen Messungen können über geeignete Aufzeichnungsgeräte protokolliert werden.

Nach dem endgültigen Fixieren des Lichtwellenleiters im Steckerstift 1 erfolgt durch die Schweissöffnung 4 hindurch eine Abtrennung des Lichtwellenleiters, so dass ein Abschnitt 2 im Steckerstift zurückbleibt. Zu diesem Zweck wird beispielsweise ein Schneidwerkzeug 29 gegen ein Widerlager 28 gepresst.

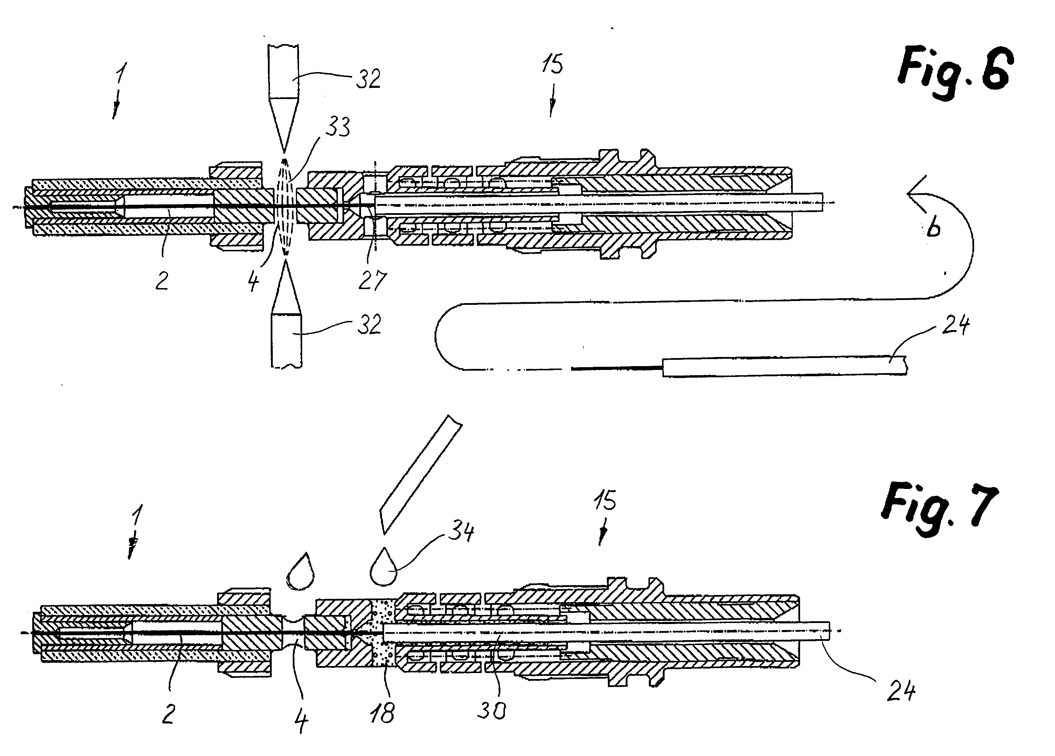

Nach dem Durchtrennen des Lichtwellenleiters 27 wird das Lichtwellenleiter-Kabel 24 in Pfeilrichtung a wieder zurückgezogen, wie in Figur 5 dargestellt. Ein Stummel 31 des Lichtwellenleiter-Abschnitts 2 ragt dabei in die Schweissöffnung 4 hinein. Eine derart vorbereitete und exakt ausgemessene Anordnung kann nun wiederum feldmässig mit einem Lichtwellenleiter-Kabel von beliebiger Länge verbunden werden, wie dies in den Figuren 6 und 7 dargestellt ist. Ein Lichtwellenleiter-Kabel 24 wird in Pfeilrichtung b so in die Anordnung eingeführt, dass der Lichtwellenleiter 27 in den Verbindungskörper eindringt, bis zur Schweissöffnung 4. Dort stösst der kabelseitige Lichtwellenleiter mit dem vormontierten Abschnitt 2 zusammen. Mittels Elektroden 32 wird ein Lichtbogen 33 erzeugt, unter dessen Einfluss die Lichtwellenleiter zusammengeschweisst werden. Anschliessend wird durch die Einfüllöffnung 18 ein Klebstoff 34 eingeführt, der die Umhüllung 30 fest verankert und der zugleich den Lichtwellenleiter schützt. Auch in die Schweissöffnung 4 wird zum Schutz der Schweissstelle Klebstoff eingeführt.

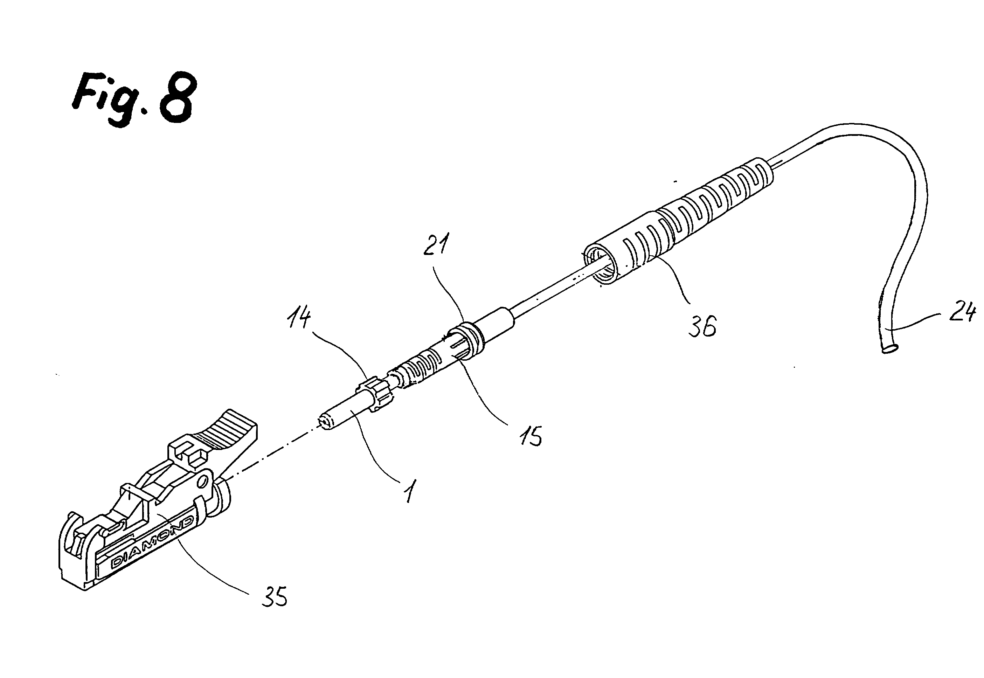

Nachdem das Lichtwellenleiter-Kabel 24 auf die beschriebene Art und Weise fest mit dem Steckerstift 1 verbunden wurde, kann die Endmontage des Steckers erfolgen, wie in Figur 8 dargestellt. Zu diesem Zweck wird das Kabelaufnahmeelement 15 in ein an sich bekanntes Steckergehäuse 35 eingeprellt, an dem Mittel zum Einrasten und Lösen des Steckers und zum stirnseitigen Schutz des Steckerstifts angeordnet sind. Ein vorher auf das Kabel aufgezogener Knickschutz 36 wird über den Flansch 21 geschnappt. Auch diese Endmontage erfolgt feldmässig, ohne dass spezielle Werkzeuge erforderlich sind.

## Patentansprüche

1. Stecker für eine optische Steckverbindung mit einem Steckerstift (1), in dem ein vormontierter Lichtwellenleiter-Abschnitt (2) derart gehalten ist, dass er sich von einer Stirnseite (3) bis zu einer seitlichen Schweissöffnung (4) im Steckerstift erstreckt und mit einer zum Lichtwellenleiter-Abschnitt (2) koaxialen Bohrung (6), die sich von einer kabelseitigen Eintrittsfläche (7) bis zur Schweissöffnung (4) erstreckt, wobei in der Schweissöffnung ein von der Eintrittsfläche her in die Bohrung eingeführter Lichtwellenleiter (27) eines Lichtwellenleiter-Kabels (24) mit dem vormontierten Lichtwellenleiter-Abschnitt (2) verschweissbar ist, dadurch gekennzeichnet, dass der Steckerstift (1) wenigstens aus einer ersten und einer zweiten Komponente zusammengesetzt ist und dass die erste Komponente den der Zentrierung des Steckerstifts dienende Aussenmantel (9) und dass die zweite Komponente die Schweissöffnung (4) und die Bohrung (6) aufweist.

2. Stecker nach Anspruch 1, dadurch gekennzeichnet, dass die erste Komponente eine Steckerhülse (8) und dass die zweite Komponente ein in die Steckerhülse eingesetzter Verbindungskörper (10) ist, wobei die Schweissöffnung (4) in einem aus der Steckerhülse ragenden Teil des Verbindungskörpers angeordnet ist.

3. Stecker nach Anspruch 2, dadurch gekennzeichnet, dass sich der Verbindungskörper (10) nur über einen Teil der Gesamtlänge der Steckerhülse (8) erstreckt und dass die Stirnseite (3) durch einen in der Steckerhülse gehaltenen Einsatz (11) mit einer zentralen Bohrung (12) gebildet wird, in welcher der Lichtwellenleiter-Abschnitt (2) fixiert ist.

4. Stecker nach Anspruch 2 oder 3, dadurch gekennzeichnet, dass die Steckerhülse (8) aus einem harten Werkstoff, insbesondere aus Keramikmaterial besteht und dass der Verbindungskörper (10) aus einem anderen Werkstoff mit einem vorzugsweise geringeren Härtegrad besteht.

5. Stecker nach Anspruch 3 und 4, dadurch gekennzeichnet, dass zwischen dem Einsatz (11) und der Steckerhülse (8) eine Zwischenhülse (13) angeordnet ist, welche die Eindringtiefe des Verbindungskörpers (10) in der Steckerhülse begrenzt.

6. Stecker nach einem der Ansprüche 1 bis 5, dadurch gekennzeichnet, dass der Verbindungskörper (10) mit einem Kabelaufnahmeelement (15) verbunden ist, das eine erste Bohrung (16) zur Aufnahme des Lichtwellenleiters (27) und eine zweite Bohrung (17) mit einem grösseren Durchmesser zur Aufnahme der Umhüllung (30) des Lichtwellenleiters aufweist und dass im Übergangsbereich von der ersten zur zweiten Bohrung eine seitliche Einfüllöffnung (18) für das Einfüllen von Klebstoff im Kabelaufnahmeelement angeordnet ist.

7. Stecker nach einem der Ansprüche 1 bis 6, dadurch gekennzeichnet, dass der Verbindungskörper 10 als Zylinderabschnitt mit einer durchgehenden zentralen Längsbohrung (5, 6) ausgebildet ist und dass die Schweissöffnung (4) eine den Zylinderabschnitt durchdringende Querbohrung ist.

8. Stecker nach Anspruch 7, dadurch gekennzeichnet, dass die zentrale Längsbohrung durch die Querbohrung in zwei Abschnitte unterteilt wird, von denen der stirnseitige Abschnitt (5) länger ist als der kabelseitige Abschnitt (6).

9. Verfahren zum Herstellen eines Steckers für eine optische Steckverbindung mit einem Steckerstift (1), in dem zuerst ein Lichtwellenleiter-Abschnitt (2) derart vormontiert wird, dass er sich von einer Stirnseite (3) bis zu einer seitlichen Schweissöffnung (4) im Steckerstift erstreckt, wobei in der Schweissöffnung ein von einer kabelseitigen Eintrittsfläche (7) des Steckerstifts her durch eine Bohrung (6) eingeführter Lichtwellenleiter (27) eines Lichtwellenleiter-Kabels (24) mit dem vormontierten Lichtwellenleiter-Abschnitt (2) verschweissbar ist, dadurch gekennzeichnet, dass zuerst ein durchgehender Lichtwellenleiter von der Eintrittsfläche (7) bis zur Stirnseite (3) in den Steckerstift (1) eingeführt wird, dass der Lichtwellenleiter wenigstens im Bereich der Stirnseite (3) im Steckerstift (1) zentriert und fixiert wird und dass die Stirnseite mit dem darin gehaltenen Lichtwellenleiterende bearbeitet wird, und dass sodann der Lichtwellenleiter in der Schweissöffnung (4) durchgetrennt wird und der kabelseitige Teil des Lichtwellenleiters aus dem Steckerstift zurückgezogen wird.

10. Verfahren nach Anspruch 9, dadurch gekennzeichnet, dass vor dem Durchtrennen des Lichtwellenleiters von der Kabelseite her Licht eingespeist wird und dass an der Stirnseite (3) die Zentrizität und gegebenenfalls weitere Werte gemessen und vorzugsweise protokolliert werden.

11. Verfahren nach Anspruch 9 oder 10, dadurch gekennzeichnet, dass nach dem Schweissen eines in den Steckerstift (1) eingeführten Lichtwellenleiters (27) die Schweissöffnung (4) mit einem Füllstoff, vorzugsweise mit einem Klebstoff (34) ausgefüllt wird.
